# FASCICULE DE BREVET EUROPEEN

(11) **EP 0 383 673 B1**
(45) Date de publication et mention de la délivrance du brevet: **21.04.1993**
(21) Numéro de dépôt: 90400386.0
(22) Date de dépôt: 13.02.1990
(51) Int. Cl.: B07C 5/02, B65G 47/14

(54) **Dispositif pour la séparation et l'alignement d'objets et installation de tri mettant en oeuvre ce dispositif**
Vorrichtung zum Trennen und Ausrichten von Gegenständen und diese Vorrichtung verwendende Sortieranlage
Device for separating and aligning objects, and sorting arrangement using this device

(30) Priorité: 15.02.1989 FR 8901981
(43) Date de publication de la demande: 22.08.1990
(73) Titulaire: LA POSTE, F-75700 Paris (FR)
(72) Inventeur: Fauchard, Pierre, F-44000 Nantes (FR)
(74) Mandataire: Armengaud Ainé, Alain

(56) Documents cités:
- EP-A- 0 094 617
- DE-A- 3 310 535
- FR-A- 2 549 395
- US-A- 2 972 433
- PATENT ABSTRACTS OF JAPAN, vol. 7, no. 85 (M-206)[1230], 9 avril 1983, page 123 M 206; & JP-A-58 11 429 (MITSUBISHI JUKOGYO) 22-01-1983

## Description

La présente invention est relative à un dispositif destiné à effectuer automatiquement la séparation et la mise en alignement selon une direction préférentielle donnée d'objets amenés en vrac à l'entrée de ce dispositif et reçus séparés et alignés à sa sortie, en vue d'un traitement ultérieur.

L'invention s'applique plus particulièrement quoique non exclusivement, à la séparation de paquets ou colis en très grandes quantités, de formes et de dimensions variables, tels que ceux reçus en défilement continu sur une bande transporteuse par un centre de tri, ou d'expédition notamment du genre de ceux en usage dans les Postes et Télécommunications ou les Entreprises de vente par correspondance, ces paquets devant par la suite être affectés d'un code d'identification en fonction de leurs destinations. Dans un tel centre, la sélection de ces paquets et notamment leur acheminement ultérieur vers des directions appropriées en fonction de ce code, nécessitent un repérage précis de celui-ci, et en particulier qui puisse s'effectuer convenablement sans risques d'erreur de comptage ou de lecture, ces conditions étant réalisées si les paquets sont préalablement espacés et placés sensiblement sur une ligne continue, selon laquelle ils défilent proximité d'un appareil pouvant alors lire correctement le code porté sur chaque paquet.

Les dispositifs actuellement connus pour la séparation des paquets utilisent, soit des jeux de bandes transporteuses animées de vitesses différentes, soit des tables vibrantes équipées de brosses rotatives convenablement orientées, la surface de ces bandes ou tables comportant généralement un revêtement présentant un coefficient de frottement élevé pour mieux freiner et aggripper les paquets au cours de leurs déplacements. Or, outre leur complexité de réalisation et la nécessité de disposer d'une surface au sol importante pour le montage de telles installations, celles-ci ne permettent pas de résoudre efficacement les problèmes posés lorsque deux paquets se présentent superposés ou inclinés par rapport à leur direction de défilement, en se recouvrant partiellement, pouvant alors fausser la lecture du code de l'un, qui peut être en partie ou totalement caché par le volume de l'autre.

En particulier dans ces installations, le taux de mise en position correcte des paquets ne dépasse pas généralement 80 %, et n'atteint qu'exceptionnellement 85 %, ce qui est encore insuffisant pour un fonctionnement optimal de l'installation, qui doit pouvoir traiter l'ensemble des paquets ou colis à trier avec un rendement d'au moins 95 %.

A titre indicatif des systèmes transporteurs du type général rappelé ci-dessus sont illustrés dans le brevet US-A-2 972 433 et la demande de brevet EP-A-0 094 617, bien que les appareils décrits dans ces documents visent des applications différentes, les rendant peu, voire inadaptés à la séparation et au tri de paquets ou objets analogues.

L'invention a pour objet un dispositif qui permet de réaliser cet objectif avec un ensemble simple, peu coûteux à fabriquer, facile d'entretien, et qui présente un encombrement relativement moindre que celui des installations classiques, et enfin soit surtout apte à traiter un débit important de paquets ou colis divers, quels que soient le poids, la forme ou la nature de l'emballage de ceux-ci.

A cet effet, le dispositif considéré, comportant des moyens de convoyage des paquets amenés en vrac à l'entrée et d'évacuation de ces mêmes paquets séparés et alignés à la sortie, se caractérise en ce qu'il comprend au moins un tronc de cône, ouvert à ses extrémités, entraîné en rotation continue autour de son axe disposé incliné sur l'horizontale et qui comporte dans sa surface interne un jeu d'ailettes hélicoïdales, décalées axialement l'une par rapport à l'autre et s'étendant ensemble sur au moins un tour complet du tronc de cône, les paquets introduits à l'extrémité supérieure de plus petit diamètre à l'entrée du tronc de cône étant évacués à son extrémité inférieure de plus grand diamètre à sa sortie.

Selon une autre caractéristique particulièrement avantageuse pour la mise en oeuvre du dispositif, la surface interne du tronc de cône comporte un revêtement à très faible coefficient de frottement, notamment du genre de polytetrafluoréthylène "Teflon", ou encore à base de silicones.

De préférence, les ailettes du tronc de cône sont au nombre de trois et disposées à 120° l'une de l'autre sur la surface interne de celui-ci. De préférence également, chaque ailette s'étend perpendiculairement à la surface interne du tronc de cône et présente un profil développé en ligne brisée, notamment en trois parties successives, inclinées sur la direction de l'axe du tronc de cône.

De façon la plus intéressante parce qu'elle est la plus efficace, les ailettes sont respectivement inclinées sur l'horizontale d'un angle égal pour les deux parties extrêmes de chaque ailette et d'un angle plus accentué pour la partie intermédiaire. Ainsi et dans un mode de réalisation préféré de l'invention, l'angle formé par les parties extrêmes de chaque ailette est voisin de 40°, l'angle de la partie intermédiaire étant de l'ordre de 60°.

Avantageusement et selon encore une autre caractéristique du dispositif selon l'invention, la partie de chaque ailette qui est la plus rapprochée de l'extrémité supérieure d'entrée du tronc de cône présente un contour externe en biseau, incliné depuis l'arête de l'ailette jusqu'à la surface interne du tronc de cône.

Dans un mode d'exécution du dispositif considéré, l'axe du tronc de cône est incliné sur le plan horizontal, de façon à former un angle compris entre 5 et 10° et de préférence égal à 7° avec ce plan. De préférence cependant, l'angle de l'axe du tronc de cône avec le plan horizontal peut être réglable, en fonction du débit des paquets à traiter et de leur vitesse de défilement.

Le mécanisme d'entraînement du tronc de cône autour de son axe peut être réalisé de toute manière appropriée, en soi connue dans des domaines éventuellement distincts de celui de la présente invention. Ainsi et selon une réalisation particulière, le tronc de cône repose sur des galets d'entraînement, commmandés en rotation en sens inverse de celui du tronc de cône, l'un des galets au moins comportant une poulie à gorge ou un pignon, assurant l'entraînement du galet et, par réaction, celui du tronc de cône, à partir d'un renvoi de mouvement provenant d'un groupe moto-réducteur à vitesse variable, commandé à la demande.

L'invention concerne également une installation de tri de paquets, mettant en oeuvre le dispositif considéré tel que défini ci-dessus, caractérisée en ce qu'elle comporte au moins deux troncs de cône successifs, entraînés à des vitesses différentes, le premier réalisant un début d'alignement des paquets et le second améliorant l'alignement et la séparation de ceux-ci, la vitesse de rotation du premier tronc de cône étant inférieure à la vitesse du second. Avantageusement, la liaison entre la sortie du premier tronc de cône et l'entrée dans le second est réalisée par au moins un tapis transporteur ou une bande d'alimentation, à vitesse linéaire éventuellement variable, les paquets étant respectivement amenés à la partie supérieure d'entrée dans le premier tronc de cône et finalement évacués à la partie inférieure de sortie du deuxième tronc de cône par d'autres tapis ou bandes analogues.

De préférence, les vitesses linéaires des paquets à la traversée des troncs de cône et celles des tapis transporteurs, présentent des valeurs successives, croissant d'une extrémité à l'autre de l'installation, dans le sens de défilement des paquets.

D'autres caractéristiques d'un dispositif pour la séparation et l'alignement d'objets en vrac, notamment de paquets, colis, ou objets analogues et d'une installation de tri mettant en oeuvre celui-ci apparaîtront encore à travers la description qui suit d'un exemple de réalisation, donné à titre indicatif et non limitatif, en référence aux dessins annexés, sur lesquels :
- La figure 1 est une vue schématique en perspective, du dispositif considéré.
- La figure 2 est une vue en coupe transversale de ce dispositif, montrant notamment les moyens utilisés pour réaliser l'entraînement du tronc de cône autour de son axe.
- La figure 3 est une vue également très schématique, en coupe longitudinale, d'une installation de tri utilisant deux troncs de cône et divers tapis ou bandes transporteuses, selon l'invention.

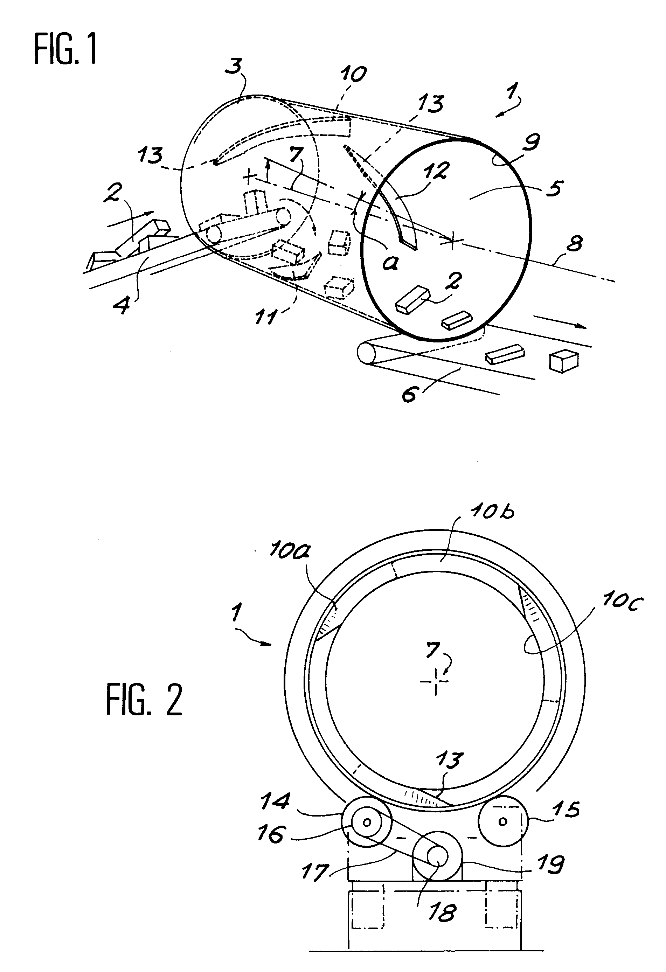

Sur la figure 1, on a désigné sous la référence 1 un tronc de cône, ouvert à ses extrémités, destiné à assurer la séparation et le tri de paquets ou colis divers tels que 2, amenés en grandes quantités et avec un débit notable, en vrac, à l'entrée supérieure 3 du tronc de cône au moyen d'un premier tapis transporteur 4, convenablement incliné vers le haut et dont l'extrémité débouche dans ou au voisinage immédiat de la partie supérieure de ce tronc de cône. Les paquets 2, déjà séparés et sensiblement alignés, sont repris à la sortie 5, à la partie inférieure du tronc de cône 1, par un second tapis transporteur 6, généralement horizontal.

Conformément à l'invention, le tronc de cône 1 est disposé de telle manière que son axe de révolution 7 fasse avec la direction de l'horizontal 8, un angle a dont, la valeur est comprise entre 5 et 10° et de préférence égale à 7°, le tronc de cône étant supporté par des moyens (non représentés) permettant s'il y a lieu de faire varier l'angle a et par suite la vitesse de traversée du tronc de cône par les paquets 2. Le tronc de cône 1 tourne sur lui-même et comporte dans sa surface intérieure 9, trois ailettes hélicoïdales, respectivement 10, 11 et 12 , décalées axialement l'une par rapport à l'autre et agencées de telle sorte qu'elles s'étendent au total sur au moins un tour complet du tronc de cône.

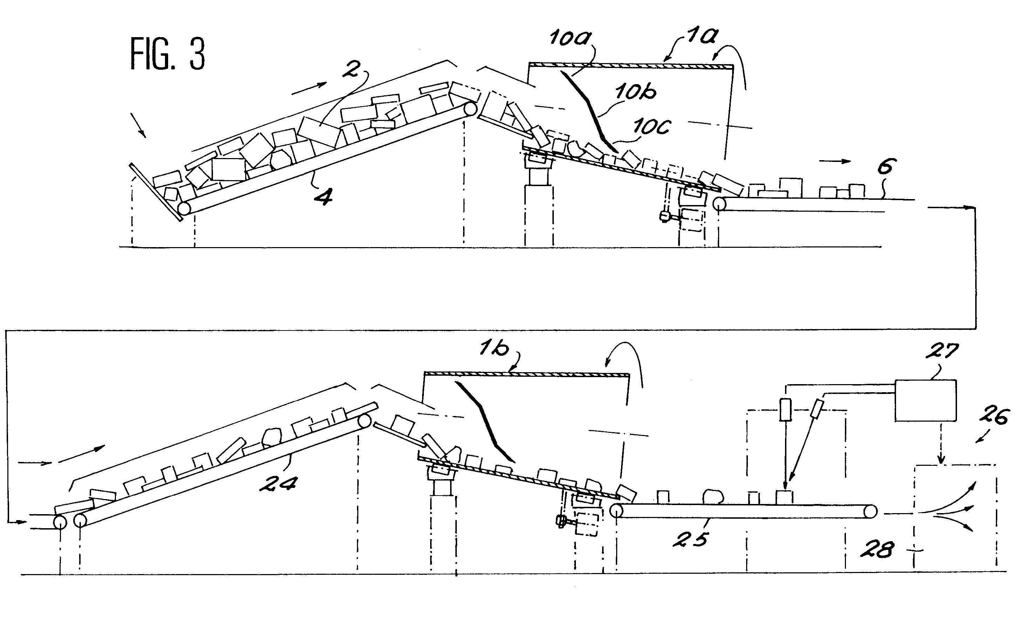

De préférence, les ailettes précédentes s'étendant sur un tiers de la circonférence du cône, sont disposées à 120° l'une de l'autre par rapport à l'axe 7. Chacune des ailettes 10, 11 ou 12 est implantée perpendiculairement à la surface interne 9, et comme on le voit plus clairement sur les figures 3 et 4, présente un profil développé en forme de ligne brisée, l'ailette 10 par exemple comprenant trois parties successives, respectivement 10a, 10b et 10c (Figure 3). Les parties d'extrémités ont notamment la même inclinaison sur la direction de l'axe 7, tandis que la partie intermédiaire 10b fait un angle sensiblement plus important. Dans l'exemple décrit, l'angle des parties 10a et 10c est choisi de préférence égal ou voisin de 40°, l'angle de la partie 10b valant environ 60°. En outre, chacune des ailettes, 10 11 ou 12, présente à son extrémité la plus rapprochée de l'entrée 3 du tronc de cône, une partie inclinée 13, s'étendant en biseau, depuis l'arête de l'ailette jusqu'à la surface interne 9 du tronc de cône.

Sur la figure 2, est schématiquement illustré un mécanisme d'entraînement sur lui-même du tronc de cône 1, comportant en particulier deux galets 14 et 15, sur lesquels il repose, l'un de ces galets, par exemple le galet 14, étant muni d'une poulie 16 permettant de transmettre à ce galet, au moyen d'une courroie de transmission 17, le mouvement d'entraînement reçu d'une autre poulie 18, fixée en bout de l'arbre de sortie d'un moto-réducteur 18 à vitesse variable. Bien entendu, il est clair que ce mécanisme est en lui-même classique et qu'il pourrait être substitué par tout autre moyen analogue ou équivalent (roue dentée engrénant avec un pignon de commande, système à vis tangente etc...) remplissant la même fonction et réalisant notamment l'entraînement à vitesse choisie du tronc de cône autour de son axe.

Sur la figure 3, l'installation de traitement de paquets ou colis représentée comporte deux troncs de cône successifs 1a et 1b, analogues à celui illustré sur la figure 1, les paquets 2, acheminés à l'entrée du premier 1a par le tapis 4 et évacués à la sortie de celui-ci par le tapis 6 de la façon décrite plus haut, subissant à la traversée de ce tronc de cône, un premier alignement, tandis que leur séparation et leur alignement définitifs sont améliorés par passage dans le second tronc de cône 1b. Les paquets 2, à la sortie du tapis 6 sont ainsi repris par un nouveau tapis élévateur 24, qui les déverse à l'entrée du second tronc de cône 1b avant qu'il ne soient évacués, alors convenablement séparés et alignés par un tapis final 25 qui les achemine enfin vers une installation de tri 26, comportant un organe de lecture 27 d'un code porté par ces paquets et, le cas échéant, un dispositif d'aiguillage 28, agissant sur la répartition des paquets selon des directions prédéterminées en fonction du code ainsi détecté et enregistré.

Dans un mode de réalisation particulier de l'installation considéré, les deux troncs de cône 1a et 1b présentent une longueur de 2 m, avec un petit diamètre à leur extrémité supérieure de l'ordre de 1 m et un grand diamètre à leur extrémité inférieure, de 1,25 m. L'inclinaison de l'axe sur l'horizontale est choisie égale à 7° environ, la vitesse de rotation étant variable pour l'un et l'autre des deux troncs de cône et comprise entre 5 et 25 t/mn selon les débits de paquets à traiter. Les trois ailettes montées de la manière indiquée à l'intérieur de chaque tronc de cône présentent chacune une hauteur d'environ 100 mm et une longueur, en projection sur un plan horizontal d'environ 900 mm.

Les vitesses relatives des deux troncs de cône de l'installation ainsi que les différents tapis transporteurs 4, 6, 24 et 25 sont choisies en fonction des caractéristiques des paquets à traiter, en particulier de leur longueur moyenne et du débit avec lequel ces paquets doivent être acheminés vers la sortie de l'installation pour leur distribution finale vers les directions correspondant aux codes portés sur ces paquets.

Ainsi, en supposant que par exemple, dix paquets ou colis successifs mis bout à bout représentent une distance approximative de trois mètres, chaque paquet ayant environ trente centimètres de long, l'expérience montre qu'il est nécessaire de fixer respectivement la vitesse linéaire de la bande ou du tapis amenant ces paquets à l'entrée du premier tronc de cône et la vitesse d'avancée de ces mêmes paquets dans ce dernier, avec un rapport sensiblement égal à celui qui mesure le nombre de ces paquets par mètre. En d'autres termes et dans l'exemple considéré, la répartition moyenne étant de trois paquets par mètre environ, si la vitesse d'avancée des paquets dans le tronc de cône est égale à 10 m/mn, on imposera à la bande d'amenée une vitesse linéaire d'environ 3,33 m/mn. Utilement même on accentuera l'écart entre ces deux vitesses, en réglant soit la vitesse dans le tronc de cône à 12 m/mn, soit la vitesse de la bande à 3 m/mn.

Dans tous les cas, la bonne marche de l'installation exige que, dans les diverses parties de cette dernière, le débit de sortie des paquets soit toujours supérieur ou au moins égal au débit d'entrée dans la partie suivante.

Ainsi avec un lot de paquets ou colis déversés en vrac à partir d'un conteneur de 500 l environ sur le premier tapis 4, représentant environ 80 à 100 paquets, on donnera par exemple au tapis une vitesse linéaire de 3 m /mn avec une inclinaison sur l'horizontale de 20 à 25°, le premier tronc de cône 1a étant entraîné sur lui-même à une vitesse telle que la vitesse de défilement des paquets dans celui-ci soit égale à 12 m/mn environ. Les paquets ainsi déversés à l'extrémité supérieure 3 et entraînés vers le bas du tronc de cône du fait des effets combinés de la gravité et de la rotation, sont alors soulevés par les ailettes successives, qui accélèrent ces paquets les décalant et finalement les séparant, en même temps que du fait de la rotation du tronc de cône, ils glissent en permanence sur la surface interne du tronc de cône pour venir un à un se disposer approximativement selon la génératrice inférieure de celui-ci. Afin de faciliter précisément ce glissement des paquets et leur retour continuel vers cette génératrice chaque fois qu'ils sont soulevés par une ailette du tronc de cône, nonobstant l'effet d'entraînement dû à la rotation, la surface interne 9 est revêtue d'une couche d'un matériau à très faible coefficient de frottement, par exemple de "Teflon" ou à base de silicones.

Le biseau a pour fonction de laisser passer un paquet qui ne pourrait être convenablement entraîné.

Les paquets 2 ainsi à peu près séparés et alignés mais encore insuffisamment décalés sortant du premier tronc de cône la par son extrémité inférieure 5, sont alors repris dans la position où ils se trouvent par la bande transporteuse 6 puis par le tapis élévateur 24, qui les acheminent progressivement mais à plus grande vitesse vers l'entrée du second tronc de cône 1b. Dans l'exemple considéré, les vitesse linéaires de la bande 6 et du tapis 24 sont choisies égales, de l'ordre de 15 m/mn, soit donc légèrement supérieure à la vitesse linéaire de ces paquets à la sortie du premier tronc de cône la (10 m/mn), afin de produire au fur et à mesure de leur reprise sur la bande un nouvel allongement du flux des paquets. Ceux-ci subissent ensuite une séparation finale dans le second tronc de cône 1b selon un processus exactement similaire à celui mis en oeuvre dans le premier, avec accélération des paquets par les ailettes et glissement continu du haut vers le bas du tronc de cône, la vitesse linéaire des paquets étant alors voisine de 18 m/mn. Enfin à la sortie de celui-ci, les paquets sont finalement repris par le tapis 25 dont la vitesse est choisie encore légèrement supérieure à celle des paquets dans le tronc de cône 1b, par exemple de l'ordre de 20 à 25 m/mn.

On réalise ainsi un dispositif et une installation de séparation et d'alignement de paquets ou colis analogues sûrs et efficaces, permettant une lecture correcte des codes ou autres moyens d'identification portés par ces paquets, qui atteint au moins 95 %. Les manipulations des paquets sont sans danger pour ces derniers, grâce à la forme enveloppante des ailettes qui les soulèvent et les décalent progressivement sans gêner leur glissement dans les troncs de cône selon la génératrice inférieure de ceux-ci. Au cas par cas, les paramètres de fonctionnement de l'installation peuvent être ajustés selon le débit à traiter, la taille des paquets, la vitesse de défilement de ceux-ci etc... A noter à cet égard que les valeurs de ces vitesses, envisagées dans l'exemple décrit n'ont naturellement qu'un caractère indicatif et qu'elles pourraient être adaptées aisément selon ces paramètres, les différentes parties de l'installation, en particulier les troncs de cône et les tapis et bandes transporteuses pouvant être commandées indépendamment par des mécanismes d'entraînement distincts, munis de variateurs de vitesse appropriés.

## Revendications

1. Dispositif pour la séparation et l'alignement d'objets, du genre paquets, colis ou analogues, comportant des moyens de convoyage (4) des paquets (2) amenés en vrac à l'entrée et d'évacuation de ces mêmes paquets séparés et alignés à la sortie, caractérisé en ce qu'il comprend au moins un tronc de cône (1), ouvert à ses extrémités, entraîné en rotation continue autour de son axe (7) disposé incliné sur l'horizontale et qui comporte dans sa surface interne (9) un jeu d'ailettes hélicoïdales (10, 11, 12), décalées axialement l'une par rapport à l'autre et s'étendant ensemble sur au moins un tour complet du tronc de cône, les paquets introduits à l'extrémité supérieure (3) de plus petit diamètre à l'entrée du tronc de cône (1) étant évacués à son extrémité inférieure (5) de plus grand diamètre à sa sortie.

2. Dispositif selon la revendication 1, caractérisé en ce que la surface interne (9) du tronc de cône (1) comporte un revêtement à très faible coefficient de frottement, notamment du genre de polytetrafluoréthylène "Teflon", ou à base de silicones.

3. Dispositif selon l'une des revendications 1 ou 2, caractérisé en ce que les ailettes (10, 11, 12) du tronc de cône (1) sont au nombre de trois et disposées à 120° l'une de l'autre sur la surface interne de celui-ci.

4. Dispositif selon la revendication 3, chaque ailette s'étend perpendiculairement à la surface interne (9) du tronc de cône et présente un profil développé en ligne brisée, notamment en trois parties successives (10a, 10b, 10c), inclinées sur la direction de l'axe du tronc de cône.

5. Dispositif selon la revendication 4, caractérisé en ce que les ailettes sont respectivement inclinées sur l'horizontale d'un angle égal pour les deux parties extrêmes de chaque ailette et d'un angle plus accentué pour la partie intermédiaire.

6. Dispositif selon la revendication 5, caractérisé en ce que l'angle formé par les parties extrêmes de chaque ailette est voisin de 40°, l'angle de la partie intermédiaire étant de l'ordre de 60°.

7. Dispositif selon l'une des revendications 3 à 6, caractérisé en ce que la partie de chaque ailette qui est la plus rapprochée de l'extrémité supérieure d'entrée du tronc de cône présente un contour externe en biseau (13), incliné depuis l'arête de l'ailette jusqu'à la surface interne (9) du tronc de cône.

8. Dispositif selon l'une quelconque des revendications 1 à 7, caractérisé en ce que l'axe du tronc de cône est incliné sur le plan horizontal de façon à former un angle compris entre 5 et 10° et de préférence égal à 7° avec ce plan.

9. Dispositif selon la revendication 8, caractérisé en ce que l'angle de l'axe du tronc de cône avec le plan horizontal est réglable, en fonction du débit des paquets à traiter et de leur vitesse de défilement.

10. Dispositif selon l'une quelconque des revendications 1 à 9, caractérisé en ce que le tronc de cône (1) repose sur des galets d'entraînement (14, 15), commandés en rotation en sens inverse de celui-ci du tronc de cône, l'un des galets (14) au moins comportant une poulie (1b) à gorge ou un pignon, assurant l'entraînement du galet et, par réaction, celui du tronc de cône, à partir d'un renvoi de mouvement provenant d'un groupe moto-réducteur (19) à vitesse variable, commandé à la demande.

11. Dispositif selon la revendication 10, caractérisé en ce que la vitesse d'entraînement du tronc de cône est comprise entre 5 et 25 t/mn.

12. Installation de tri de paquets ou colis, mettant en oeuvre au moins un dispositif selon l'une quelconque des revendications 1 à 11, caractérisée en ce qu'elle comporte au moins deux troncs de cône successifs (1a, 1b) entraînés à des vitesses différentes, le premier (1a) réalisant un début d'alignement des paquets (2) et le second (1b) améliorant l'alignement et la séparation de ceux-ci, la vitesse de rotation du premier tronc de cône étant inférieure à la vitesse du second.

13. Installation selon la revendication 12, caractérisée en ce que la liaison entre la sortie du premier tronc de cône (1a) et l'entrée dans le second (1b) est réalisée par au moins un tapis transporteur (24) et/ou une bande d'alimentation (6), à vitesse linéaire éventuellement variable, les paquets (8) étant respectivement amenés à la partie supérieure d'entrée dans le premier tronc de cône et finalement évacués à la partie inférieure de sortie du deuxième tronc de cône par d'autres tapis ou bandes analogues.

14. Installation selon la revendication 13, caractérisée en ce que les vitesses linéaires des paquets (2) à la traversée des troncs de cône (1a et 1b) et celles des tapis transporteurs (6, 24, 25) présentent des valeurs successives, croissant d'une extrémité à l'autre de l'installation, dans le sens de défilement des paquets.

## Patentansprüche

1. Vorrichtung zur Trennung und Ausrichtung von stückgut- oder paketartigen Gegenständen oder dergleichen mit einer Fördereinrichtung (4), welche die Pakete (2) als Schüttgut dem Einlaß zuführt, und mit einer Einrichtung zur Abführung dieser gleichen getrennten und ausgerichteten Pakete am Auslaß, dadurch gekennzeichnet, daß sie mindestens eine an ihren Enden offene konische Trommel (1) aufweist, die mit kontinuierlicher Drehung um ihre zur Horizontalen geneigte Achse (7) angetrieben ist und an ihrer Innenwand (9) einen Satz von spiralförmigen Leitelementen (10, 11, 12) aufweist, die zueinander axial versetzt sind und sich insgesamt über mindestens eine vollständige Umdrehung der konischen Trommel erstrecken, wobei die am Einlaß am oberen Ende (3) mit kleinerem Durchmesser der kegelförmigen Trommel (1) eingeführten Pakete am Auslaß an deren unteren Ende (5) von größerem Durchmesser herausbefördert werden.

2. Vorrichtung nach Anspruch 1, dadurch gekennzeichnet, daß die Innenwand (9) der konischen Trommel (1) eine Auskleidung mit sehr geringem Reibungskoeffizienten aufweist, insbesondere vom Typ Polytetrafluorethylen "Teflon" oder auf der Basis von Silikonen.

3. Vorrichtung nach einem der Ansprüche 1 oder 2, dadurch gekennzeichnet, daß die kegelförmige Trommel (1) drei Leitelemente (10, 11, 12) aufweist, die in einem Winkelabstand von 120 Grad voneinander an deren Innenwand angeordnet sind.

4. Vorrichtung nach Anspruch 3, wobei sich jedes Leitelement senkrecht zur Innenwand (9) der kegelförmigen Trommel erstreckt und im abgewickelten Profil eine unterbrochene Linie bildet, insbesondere mit drei aufeinanderfolgenden Teilen (10a, 10b, 10c), die bezüglich der Richtung der Achse der kegelförmigen Trommel geneigt sind.

5. Vorrichtung nach Anspruch 4, dadurch gekennzeichnet, daß die zwei äußeren Teile jedes Leitelements jeweils um einen gleichen Winkel gegenüber der Horizontalen geneigt sind und der mittlere Teil in einem spitzeren Winkel zur Horizontalen geneigt ist.

6. Vorrichtung nach Anspruch 5, dadurch gekennzeichnet, daß der von den äußeren Teilen jedes Leitelements gebildete Winkel nahe bei 40 Grad und der vom Mittelteil gebildete Winkel in der Größenordnung von 60 Grad liegt.

7. Vorrichtung nach einem der Ansprüche 3 bis 6, dadurch gekennzeichnet, daß der dem oberen Einlaßende der kegelförmigen Trommel nächstliegende Teil jedes Leitelements einen abgeschrägten äußeren Umriß (13) aufweist, der schräg von der Leitelementkante bis zur Innenwand (9) der kegelförmigen Trommel verläuft.

8. Vorrichtung nach einem der Ansprüche 1 bis 7, dadurch gekennzeichnet, daß die Achse der kegelförmigen Trommel gegenüber der horizontalen Ebene in einem Winkel zwischen 5 und 10 Grad, vorzugsweise 7 Grad geneigt ist.

9. Vorrichtung nach Anspruch 8, dadurch gekennzeichnet, daß der Winkel der Achse der kegelförmigen Trommel mit der horizontalen Ebene in Abhängigkeit vom Durchsatz an zu behandelnden Paketen und deren Durchlaufgeschwindigkeit einstellbar ist.

10. Vorrichtung nach einem der Ansprüche 1 bis 9, dadurch gekennzeichnet, daß die kegelförmige Trommel (1) auf Antriebsrollen (14, 15) ruht, die in entgegengesetztem Drehsinn wie der der kegelförmigen Trommel angetrieben sind, wobei mindestens eine der Rollen (14) eine Riemenscheibe (16) oder ein Ritzel trägt, welche die Rolle und über diese die kegelförmige Trommel antreiben und selbst von einem Getriebemotor (19) mit veränderlicher Geschwindigkeit angetrieben werden, der nach Bedarf gesteuert wird.

11. Vorrichtung nach Anspruch 10, dadurch gekennzeichnet, daß die Antriebsgeschwindigkeit der kegelförmigen Trommel zwischen 5 und 25 Upm liegt.

12. Paket- oder Stückgutverteilanlage, die mindestens eine Vorrichtung nach einem der Ansprüche 1 bis 11 benutzt, dadurch gekennzeichnet, daß sie mindestens zwei aufeinanderfolgende kegelförmige Trommeln (1a, 1b) aufweist, die mit verschiedenen Geschwindigkeiten angetrieben sind, wobei die erste Trommel (1a) für eine beginnende Ausrichtung der Pakete (2) sorgt und die zweite Trommel (1b) die Ausrichtung und Trennung derselben verbessert und die Umdrehungsgeschwindigkeit der ersten kegelförmigen Trommel kleiner als die Umdrehungsgeschwindigkeit der zweiten ist.

13. Anlage nach Anspruch 12, dadurch gekennzeichnet, daß die Verbindung zwischen dem Auslaß der ersten kegelförmigen Trommel (1a) und dem Einlaß in die zweite (1b) durch mindestens ein Förderband (24) und/oder Zuführband (6) mit gegebenenfalls veränderlicher linearer Geschwindigkeit hergestellt wird, wobei die Pakete (2) durch andere Förderbänder oder entsprechende Bänder jeweils zum oberen Einlaßteil in die erste kegelförmige Trommel gebracht und schließlich am unteren Auslaßteil der zweiten kegelförmigen Trommel abgeführt werden.

14. Anlage nach Anspruch 13, dadurch gekennzeichnet, daß die linearen Geschwindigkeiten der Pakete (2) beim Durchgang durch die kegelförmigen Trommeln (1a) und (1b) und diejenigen der Transportbänder (24, 25 6) von einem zum anderen Ende der Anlage in Richtung des Durchlaufs der Pakete zunehmen.

## Claims

1. A device for the separation and alignment of objects of the packages, parcels or similar kind, including conveyor means (4) for the parcels (2) brought in bulk to the inlet and for discharging the same parcels separated and aligned at the outlet, characterized in that it includes at least one truncated cone (1) opened at its ends, driven continuously in rotation about its axis (7) which is inclined with respect to the horizontal and which includes in its inner surface (9) a set of helical wings (10,11,12), axially offset with respect to one another and extending when taken together over at least one complete turn of the truncated cone, the parcels introduced at the upper end (3) of smaller diameter at the inlet of the truncated cone (1) being discharged at its lower end (5) of larger diameter at its outlet.

2. A device according to claim 1, characterized in that the inner surface (9) of the truncated cone (1) includes a coating with a very low coefficient of friction, notably of the polytetrafluorethylene "Teflon" type, or silicone based.

3. A device according to claim 1 or 2, characterized in that the truncated cone wings (10,11,12), are three in number and placed at 120° with respect to one another on its inner surface.

4. A device according to claim 3, characterized in that each wings extends perpendicularly to the truncated cone inner surface (9) and has a profile which is developed as a broken line, notably into three successive portions, (10a,10b,10c) inclined with respect to the direction of the truncated cone axis.

5. A device according to claim 4, characterized in that the wings are respectively inclined with respect to the horizontal by an angle equal for the two extreme portions of each wing and by a more acute angle for the intermediate portion.

6. A device according to claim 5, characterized in that the angle formed by the extreme portions of each wing is close to 40°, the angle of the intermediate portion being of the order of 60°.

7. A device according to any of claims 3 to 6, characterized in that the portion of each wing which is closer to the inlet upper end of the truncated cone has a bevelled outer contour (13), inclined from the edge of the wing toward to the truncated cone inner surface (9).

8. A device according to any of claims 1 to 7, characterized in that 'the truncated cone axis is inclined with respect to the horizontal plane so as to form an angle between 5 and 10° and preferably equal to 7° with this plane.

9. A device according to claim 8, characterized in that the angle formed by the truncated cone axis and the horizontal plane can be settable as a function of the flow rate of parcels to be treated and of their speed of travel.

10. A device according to any of claims 1 to 9, characterized in that the truncated cone (1) bears on driving rollers (14,15), controlled in rotation in a reverse direction to that of the truncated cone, one (14) of the rollers at least including a grooved pulley (16) or a pinion for driving the roller and, by reaction, the truncated cone, from a movement return device provided by a variable speed reduction gear unit (19), controlled as required.

11. A device according to claim 10, characterized in that the driving speed of the truncated cone is between 5 and 25 r/min.

12. A parcel sorting installation using a device according to any of claims 1 to 11, characterized in that it includes at least two successive truncated cones (1a,1b), driven at different speeds, the first (1a) providing for a beginning of alignment of the parcels (2) and the second (1b) improving the alignment and the separation of said parcels, the speed of rotation of the first truncated cone being less than the speed of the second truncated cone.

13. An installation according to claim 12, characterized in that the connection between the outlet of the first truncated cone (1a) and the inlet of the second truncated cone (1b) is provided by at least a conveyor belt (24) or a feeding band (6), with a linear speed possibly variable, the parcels (2) being respectively brought at the inlet upper portion of the first truncated cone and finally discharged at the lower outlet portion of the second truncated cone by other similar conveyor bands or belts.

14. An installation according to claim 13, characterized in that the linear speeds of the parcels (2) when passing through the truncated cones, (1a and 1b) and those of the conveyor belts, (6, 24, 25) have successive values increasing from one end of the installation to the other, in the direction of travel of the parcels.
